# FASCICULE DE BREVET EUROPEEN

(11) **EP 0 792 038 B1**
(45) Date de publication et mention de la délivrance du brevet: **07.06.2006**
(21) Numéro de dépôt: 97400379.0
(22) Date de dépôt: 20.02.1997
(51) Int. Cl.: H04J 3/14, H04J 9/00

(54) **Système de surveillance d'un réseau en anneau multi-longueur d'onde**
Überwachungssystem eines Multiwellenlängen-Ringnetzes
Monitoring system of a multi-wavelength ring network

(30) Priorité: 23.02.1996 FR 9602262
(43) Date de publication de la demande: 27.08.1997
(73) Titulaire: FRANCE TELECOM, 75015 Paris (FR)
(72) Inventeur: Hamel, André, 22300 Lannion (FR); Tholey, Valérie, 69100 Villeurbanne (FR); Stoschek, Jean, 22560 Pleumeur Bodou (FR)
(74) Mandataire: Poulin, Gérard

(56) Documents cités:
- EP-A- 0 234 730
- DE-A- 3 525 105
- US-A- 5 150 243
- US-A- 5 265 096
- US-A- 5 513 029
- ANT NACHRICHTENTECHNISCHE BERICHTE, Décembre 1986, pages 95-112, XP000200033 HOST KLEINMANN E.A.: "Optische Betriebsysteme für den Weitverkehr"

## Description

### DOMAINE TECHNIQUE

La présente invention concerne un système de surveillance d'un réseau en anneau multi-longueur d'onde.

Elle s'applique notamment au domaine des télécommunications par fibres optiques et tout particulièrement aux télécommunications utilisant la norme de transmission Hiérarchie Numérique Synchrone ("*Synchronous Digital Hierarchy"*) encore appelée norme de transmission HNS ("SDH" dans les articles en langue anglaise).

### ÉTAT DE LA TECHNIQUE ANTÉRIEURE

Les réseaux actuels de transmission d'informations selon la norme de transmission Hiérarchie Numérique Synchrone assurent la transmission des informations dans les architectures en anneau ou maillées et une partie de la capacité de transmission est réservée à la gestion des données transmises.

On fait ci-après quelques rappels sur la Hiérarchie Numérique Synchrone.

La Hiérarchie Numérique Synchrone désigne les étapes successives du multiplexage qui permettent de transmettre simultanément des signaux de débits et de natures différents.

Les signaux transportés dans un réseau de transmission synchrone (c'est-à-dire un réseau utilisant la norme HNS) sont tout d'abord "enveloppés" dans un conteneur.

Ce conteneur est un sous-ensemble de la trame qui est réservé et affecté à la transmission d'un débit donné.

Dans la HNS, une partie des informations est réservée à la gestion des données transmises.

Ces informations de gestion, appelées surdébits (*"overheads"*), sont associées soit à la trame, soit aux conteneurs.

On parle dans ce cas de conteneurs virtuels.

Ces derniers sont gérés dans le réseau de transmission HNS, indépendamment du signal qu'ils transportent.

Les réseaux HNS sont synchronisés mais les signaux arrivant dans un noeud d'un tel réseau peuvent avoir subi des variations de phase, dues aux fluctuations de temps de propagation dans le réseau, ou des écarts de fréquence en cas de synchronisation défaillante ou de fonctionnement plésiochrone.

Ce problème est résolu par l'utilisation d'un pointeur qui indique la position relative d'un signal dans la trame synchrone, permettant ainsi de repérer la phase des différents signaux, sans avoir à réaliser l'alignement en phase des trames de ceux-ci.

L'information utile peut donc "flotter" dans l'espace de trame qui lui est réservé, sa position étant repérée par le pointeur.

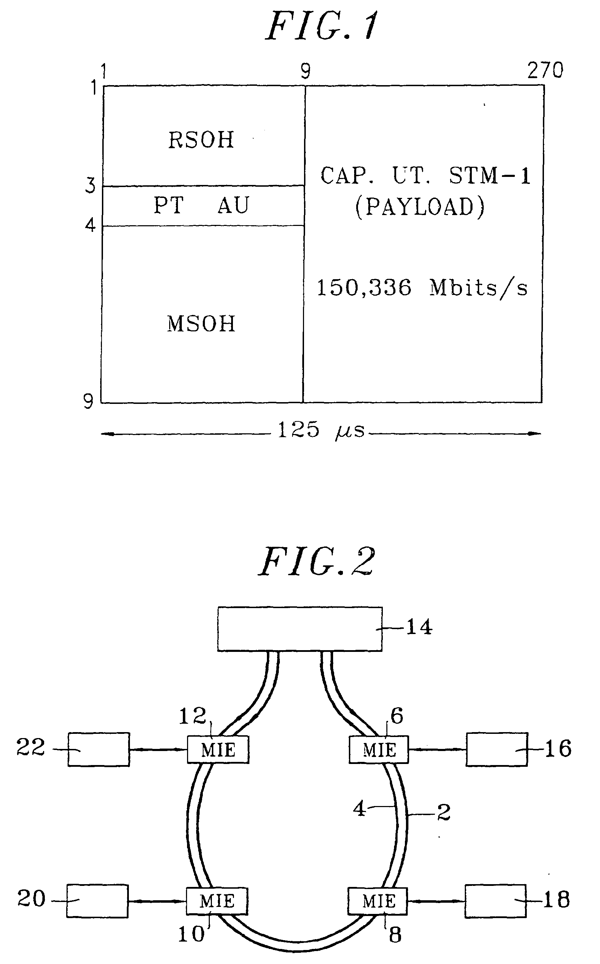

La figure 1 représente schématiquement la trame de base STM-1 (pour *"Synchronous Transport Module-1"*)*.*

Sur cette figure 1, AU représente l'Unité Administrative *("Administrative Unit"*) et PT représente le pointeur correspondant.

La trame de base STM-1 est structurée en 9 rangées de 270 octects et a pour caractéristiques une longueur de 2430 octets, une durée de 125 µs et un débit de 155,520 Mbits/s.

Elle possède une capacité utile ("payload") de 2349 octets (150,336 Mbits/s) et un débit réservé à la gestion de 81 octets.

Les multiplex à haut débit normalisés sont le STM-1 (155,520 Mbits/s), le STM-4 (622, 080 Mbits/s) et le STM-16 (2488, 320 Mbits/s).

Divers surdébits sont réservés, dans la trame, à l'exploitation et à la maintenance, à savoir :
- Le RSOH ou surdébit de section de régénération (*"Regeneration Section Overhead"*)*,* destiné à la gestion des sections de régénération au niveau de chaque répéteur-régénérateur,
- le MSOH ou surdébit de section de multiplexage ("Multiplexing Section Overhead"), destiné à la gestion des sections de multiplexage au niveau des terminaux de ligne,
- le POH associé aux VC-4, c'est-à-dire le surdébit d'exploitation (*"Path Overhead"*) destiné à la gestion des conteneurs virtuels d'ordre 4, et
- le POH des VC d'ordre inférieur, c'est-à-dire le surdébit d'exploitation qui est destiné à la gestion des conteneurs virtuels d'ordre inférieur.

On donne ci-dessous la signification des octets ("*bytes*") du RSOH :
A1,A2 : La configuration A1A1A1A2A2A2 constitue le mot de verrouillage de trame (A1=11110110 A2=00101000).
C1 : Indicateur AUG. Il s'agit d'un numéro attribué à un AUG, c'est-à-dire à un groupe d'unités administratives (*"Administrative Unit* Group"), avant d'être multiplexé au niveau STM-N.
B1 : Octet réservé à la surveillance des erreurs sur les bits de la section élémentaire régénérée (entre deux régénérateurs), en utilisant un code de parité 8 à entrelacement des bits (BIP8), parité paire.
E1 et F1 : Ces deux octets fournissent une voie de service et une voie utilisateur, uniquement dans le AUG n°1 d'un STM-N.
D1 à D3 : Ces trois octets sont affectés à la communication de données de la section de régénération (DCC pour *Data Communication Channel*) à 192 kbits/s (Prolongement du réseau de gestion).

On donne ci-dessous la signification des octets du MSOH :
B2 : Trois octets réservés à la surveillance des erreurs sur les bits de la section de multiplexage, en utilisant un code de parité 24 à entrelacement des bits (BIP24), parité paire, calculé sur tous les octets de la trame précédente sauf ceux du RSOH.
K1, K2 : Ces deux octets sont affectés à la commande de commutation de protection automatique (APS pour Automatic Protection Switching) 1+1 ou 1:N. On exploite uniquement les octets K1 et K2 du AUG n°1 d'un STM-N. K2 est une commande sur alarme distante FERF (Far End Remote Failure) : SIA, Mq Sig par exemple.
D4 à D12 : ces neufs octets forment un canal de communication de données ("*Data communication Channel*") ou DCC, à 576 kbits/s, pour une section de multiplexage (Prolongement du réseau de gestion).
Z1 et Z2 : Octets de réserve.
E2 : Voies de service à 4 kbits/s sur une section de multiplexage.

Le tableau I ci-dessous représente le tableau des octets du surdébit dans une trame STM-1.

**TABLEAU I**

| | | | | | | | | |
|---|---|---|---|---|---|---|---|---|
| A1 | A1 | A1 | A2 | A2 | A2 | C1 | | |
| B1 | | E1 | | | F1 | | | |
| D1 | | D2 | | | C3 | | | |

| | | | | | | | | |
|---|---|---|---|---|---|---|---|---|
| Pointeur | | | | | | | | |
| B2 | B2 | B2 | K1 | | | K2 | | |
| D4 | | D5 | | | | D6 | | |
| D7 | | D8 | | | | D9 | | |
| D10 | | D11 | | | | D12 | | |
| Z1 | Z1 | Z1 | Z2 | Z2 | Z2 | E2 | NU | NU |

Revenons maintenant aux réseaux en anneau actuels.

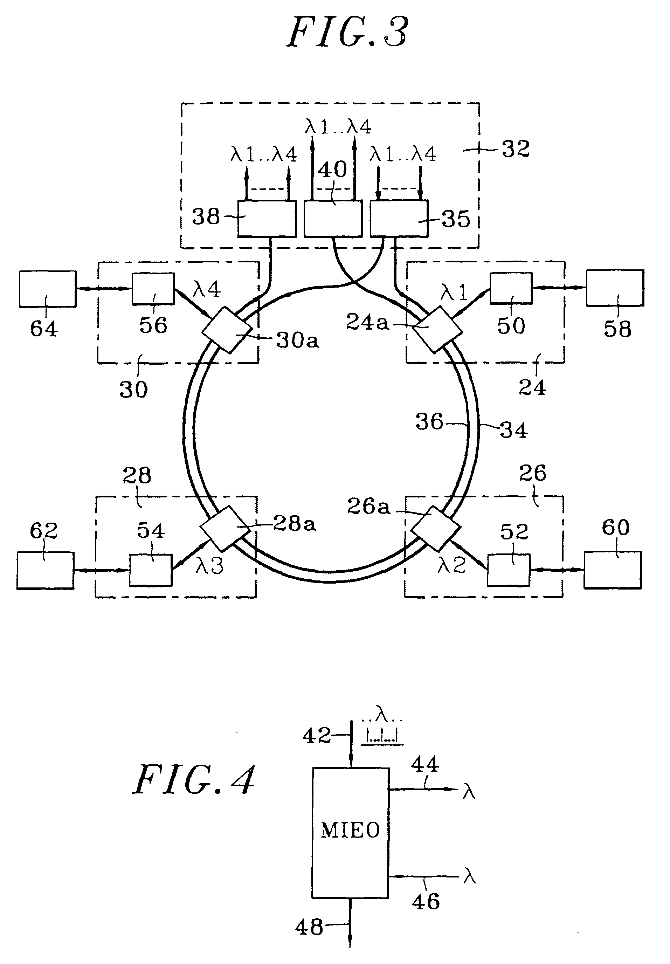

Un exemple d'un réseau en anneau standard est schématiquement représenté sur la figure 2.

Il s'agit d'un réseau bidirectionnel, comprenant deux fibres optiques référencées 2 et 4 qui sont parcourues en sens contraires par les informations sous forme optique.

Une seule longueur d'onde est transmise dans chaque fibre.

Le réseau de la figure 2 comprend quatre noeuds 6, 8, 10, 12 et une station centrale 14.

Chaque noeud comprend un Multiplexeur à Insertion-Extraction ("*Add-Drop Multiplexer*") électronique connu sous le sigle MIE ("*ADM*" dans les articles en langue anglaise).

Ces MIE communiquent respectivement avec des zones d'utilisation locale 16, 18, 20, 22, par exemple à un débit de 2 Mbits/s.

Ainsi, dans le réseau de la figure 2, des fibres optiques sont utilisées comme support de transmission entre deux noeuds successifs.

Il y a une transposition optique/électrique à l'arrivée de chaque noeud et une transposition électrique/optique au départ de chaque noeud.

Les signaux de gestion et d'alarmes sont élaborés dans les MIE et donc dans le domaine électrique (état des alarmes, calcul des erreurs de transmission par exemple) et sont ajoutés aux informations utiles selon les spécifications définies dans la norme correspondante et le tout est transmis par fibre optique au noeud suivant.

L'exploitation du surdébit permet une visibilité globale de l'anneau.

Les défauts (coupure de fibre ou de connecteur par exemple) et la qualité de la transmission sont analysés sur chaque section, entre deux MIE.

Actuellement, la possibilité de transmettre simultanément plusieurs longueurs d'onde sur une même fibre n'est pas exploitée dans les réseaux en anneau.

Les premières applications envisagées de transmission multi-longueur d'onde concernent les liaisons point à point à haut débit et longue distance.

Les solutions proposées sont fondées sur la propagation simultanée de plusieurs longueurs d'onde sur une fibre optique avec des amplificateurs optiques en ligne pour avoir une grande portée.

Une solution proposée pour transmettre les informations de surveillance est l'utilisation d'une longueur d'onde dédiée à la gestion qui est dérivée à chaque noeud et détectée afin de surveiller les paramètres des amplificateurs optiques installés en ligne.

Des systèmes d'amplification optique multi-longueur d'onde pour des liaisons point à point sont par exemple proposés par la société Pirelli sous la référence T31.

En ce qui concerne les architectures en anneau actuellement considérées, la capacité de transmission est répartie sur les différents noeuds.

Pour augmenter cette capacité de transmission lorsque l'anneau arrive à saturation, il est nécessaire de changer les équipements de tous les noeuds pour passer à un niveau de transmission supérieur dans la hiérarchie numérique, par exemple pour passer de STM-1 à STM-4 ou de STM-4 à STM-16.

Des études menées actuellement dans plusieurs laboratoires de télécommunications proposent d'introduire le multiplexage en longueur d'onde sur les architectures en anneau.

A ce sujet, on consultera le document suivant :
A. Hamel et al., Multilayer add-drop multiplexers in a self-healing WDW ring network, OFC'95 Technical Digest

La solution qui est généralement proposée est d'affecter une longueur d'onde par lien entre deux noeuds pour assurer l'échange des informations correspondantes sur un support physique en anneau.

Cette solution est rendue possible par l'introduction d'une couche optique qui permet l'échange des informations par routage spectral.

Ceci est illustré par la figure 3 qui montre de façon schématique un anneau multicolore HNS.

Cet anneau comprend quatre noeuds 24, 26, 28, 30 et une tête de réseau 32, qui sont reliés par deux fibres optiques 34 et 36 (anneau bidirectionnel).

Ces dernières sont parcourues en sens contraires par les informations sous forme optique.

La tête de réseau 32 contient des moyens 35 d'émission des informations destinées aux différents noeuds et des moyens 38 et 40 de réception des informations provenant de ces noeuds.

Ces moyens 38 et 40 correspondent respectivement aux fibres 34 et 36.

Dans le réseau en anneau de la figure 3, on utilise quatre longueurs d'onde λ1, λ2, λ3 et λ4 qui sont respectivement associées aux noeuds 24, 26, 28 et 30.

Chaque noeud comprend un composant optique appelé Multiplexeur à Insertion-Extraction Optique connu sous le sigle MIEO ("OADM" dans les articles en langue anglaise).

Les MIEO associés aux noeuds 24, 26, 28 et 30 sont respectivement référencés 24a, 26a, 28a et 30a.

Le principe de fonctionnement d'un exemple simple de MIEO est schématiquement illustré par la figure 4.

Ce MIEO de la figure 4 reçoit des signaux de diverses longueurs d'onde à son entrée 42, permet par exemple d'extraire de ces signaux un signal de longueur d'onde λ et fournit celui-ci à sa sortie d'extraction 44.

De plus, ce MIEO permet d'insérer, parmi les signaux non extraits, un signal de longueur d'onde λ parvenant à son entrée d'insertion 46 et fournit, à sa sortie 48, ce signal ainsi que les signaux non extraits.

On voit sur la figure 3 que les MIEO des noeuds 24, 26, 28 et 30 communiquent respectivement avec des équipements 50, 52, 54 et 56 qui sont par exemple du genre des MIE de la figure 2.

Ces équipements 50, 52, 54 et 56 communiquent eux-mêmes respectivement avec des zones d'utilisation locale 58, 60, 62 et 64.

Chacun des MIEO peut être fixe ou accordable (tension de commande ou fréquence électrique par exemple) et plusieurs technologies optiques sont utilisables (filtres optiques multidiélectriques ou réseaux de diffraction ou réseaux de Bragg photo-inscrits par exemple).

Dans l'exemple de la figure 3, comme on l'a vu, une longueur d'onde est affectée à chaque noeud.

Le MIEO correspondant est réalisé pour dériver cette longueur d'onde.

Les autres longueurs d'onde restent dans les fibres.

Ainsi, les informations qui sont échangées entre la tête de réseau et le noeud 30, par la fibre 34, sont acheminées sous la longueur d'onde λ4 et elles traversent quatre sections de fibre optique sans transposition optique/électrique et donc sans que l'on ait des informations sur la qualité de la transmission sur chaque tronçon et sans que l'on ait la possibilité de localiser un défaut de transmission lié à une longueur d'onde, comme par exemple une dérive en longueur d'onde ou la dégradation des performances d'un filtre optique d'un MIEO.

### EXPOSÉ DE L'INVENTION

La présente invention a pour but de remédier aux inconvénients précédents afin d'avoir une visibilité de la couche optique (ensemble des fibres et des MIEO) aussi fine (section par section) et précise (longueur d'onde par longueur d'onde) que sur un anneau de transmission HNS standard (du genre de celui de la figure 2) pour localiser les défauts, élaborer les alarmes (au niveau des équipements) et assurer la transmission de ces alarmes aux moyens de gestion de l'anneau qui sont situés dans la tête de réseau (mais ne sont pas représentés sur la figure 3).

Plus généralement, la présente invention résout le problème de la surveillance d'un réseau en anneau multi-longueur d'onde et de la transmission des informations relatives à cette surveillance aux moyens de gestion du réseau.

US 5 150 243 A décrit un système de surveillance d'un réseau à fibres optiques.

De façon précise, la présente invention a pour objet un système de surveillance d'un réseau en anneau multi-longueur d'onde, ce réseau étant destiné à la transmission, selon une norme donnée, d'informations sous forme optique, multiplexées en longueur d'onde, ces informations occupant, lorsqu'elles sont converties sous forme électrique, une bande de fréquences appelée bande de transmission, ce réseau comprenant :
- des noeuds optiquement reliés les uns aux autres par au moins une première fibre optique qui passe successivement par ces noeuds et qui est destinée à être parcourue dans un premier sens par les informations,
- des multiplexeurs à insertion-extraction électroniques, appelés MIE, respectivement placés dans les noeuds du réseau et aptes à envoyer des informations à d'autres noeuds,
- des multiplexeurs à insertion-extraction optiques, appelés MIEO, respectivement associés aux MIE, chaque MIEO étant apte à insérer, dans la première fibre, les informations provenant du MIE associé et à extraire de cette première fibre les informations destinées à ce MIE associé, et
- des moyens de gestion du réseau, au moins une longueur d'onde étant traitée dans chaque noeud,
ce système de surveillance étant caractérisé en ce qu'il comprend :
- des moyens de superposition aux informations, pour au moins une longueur d'onde par noeud, d'un signal optique de surveillance dont la fréquence, lorsque ce signal est converti sous forme électrique, est en dehors de la bande de transmission,
- dans chaque noeud, un circuit de surveillance destiné à prélever au moins une partie des signaux de surveillance qui parviennent à ce noeud, à élaborer des informations de surveillance en fonction de cette partie prélevée et à envoyer ces informations de surveillance dans la première fibre optique par l'intermédiaire du MIE et du MIEO de ce noeud, ces informations de surveillance parvenant ainsi aux moyens de gestion.

Selon un mode de réalisation préféré du système objet de l'invention, les informations sont transmises selon la norme de transmission Hiérarchie Numérique Synchrone.

Selon un premier mode de réalisation particulier du système objet de l'invention, les informations de surveillance sont envoyées aux moyens de gestion après avoir été introduites dans le surdébit des informations à transmettre sous forme optique.

Selon un deuxième mode de réalisation particulier, chaque MIE comprend un moyen d'émission de lumière qui est optiquement couplé au MIEO correspondant et qui est commandé par des signaux électriques correspondant aux informations à transmettre sous forme optique et par un signal électrique dont la fréquence est située en dehors de la bande de transmission, ce signal électrique étant modulé par des signaux électriques correspondant aux informations de surveillance.

Selon un mode de réalisation particulier de l'invention, le réseau comprend une deuxième fibre optique passant successivement par les noeuds du réseau et destinée à être parcourue par les informations dans un deuxième sens opposé au premier sens, chaque MIEO étant apte à insérer dans la deuxième fibre les informations provenant du MIE associé et à extraire de cette deuxième fibre les informations destinées à ce MIE associé et les informations de surveillance envoyées dans la première fibre sont également envoyées dans la deuxième fibre et réciproquement.

Chaque noeud peut être associé à une longueur d'onde ou le réseau peut être un réseau à noeuds colorés, chaque noeud étant alors apte à traiter une pluralité de longueurs d'onde, ou encore le réseau peut être un réseau à sections colorées, chaque noeud étant alors apte à traiter deux longueurs d'onde.

De préférence, la fréquence de chaque signal optique de surveillance converti sous forme électrique est en deçà de la bande de transmission.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1, déjà décrite, illustre schématiquement la trame de base STM-1,
- la figure 2, déjà décrite, est une vue schématique d'un réseau en anneau connu,
- la figure 3, déjà décrite, est une vue schématique d'un réseau en anneau multicolore connu,
- la figure 4, déjà décrite, est une vue schématique d'un exemple de MIEO,
- la figure 5 est une vue schématique d'un premier mode de réalisation particulier du système de surveillance objet de l'invention, appliqué à la surveillance d'un réseau en anneau unidirectionnel à deux noeuds,
- la figure 6 est une vue schématique d'un deuxième mode de réalisation particulier du système de surveillance objet de l'invention, également appliqué à la surveillance de ce réseau en anneau unidirectionnel à deux noeuds,
- la figure 7 illustre schématiquement l'application de l'invention à la surveillance d'un réseau en anneau unidirectionnel à quatre noeuds,
- la figure 8 illustre schématiquement l'application de l'invention à la surveillance d'un réseau en anneau bidirectionnel,
- la figure 9 illustre schématiquement l'application de l'invention à la surveillance d'un réseau en anneau à noeuds colorés, et
- la figure 10 illustre schématiquement l'application de l'invention à la surveillance d'un réseau en anneau à sections colorées.

### EXPOSÉ DÉTAILLÉ DE MODES DE RÉALISATION PARTICULIERS

Dans un réseau en anneau que l'on veut surveiller conformément à la présente invention, il n'y a aucun équipement électronique sur la ou les fibres optiques de ce réseau (couche tout optique).

Cependant, étant donné qu'il y a toujours une longueur d'onde qui est traitée dans chaque noeud du réseau, on utilise, conformément à la présente invention, la superposition d'une fréquence électrique à chaque longueur d'onde, en dehors de la bande de transmission.

Plus précisément, lorsque les informations que l'on veut transmettre sous forme optique dans le réseau sont converties en signaux électriques, ces signaux occupent une bande de fréquence appelée "bande de transmission" qui va, par exemple, de 20 kHz à 150 MHz.

Aux longueurs d'onde optiques traitées dans le réseau on associe des fréquences qui sont situées en dehors de cette bande de transmission.

On peut choisir des fréquences situées au-delà de la bande de transmission mais, de préférence, on choisit des fréquences situées en-deçà de cette bande de transmission.

Par exemple, étant donné une longueur d'onde λ traitée dans un noeud du réseau, on lui associe une fréquence f de 3,5 kHz et le signal électrique sinusoïdal ayant cette fréquence f est superposé aux signaux électriques que l'on veut transmettre dans le réseau et il est converti avec ceux-ci sous forme optique pour cette transmission.

Il est à noter que la fréquence f peut être modulée.

La superposition mentionnée ci-dessus permet de créer un canal de transmission superposé, à bas débit, qui joue le rôle de traceur pour la longueur d'onde associée et le signal de large bande transmis.

Tout dégradation du réseau au cours de la transmission se répercute de façon similaire sur le signal de large bande et le traceur.

Ce traceur est reçu et analysé au niveau de chaque noeud du réseau et les informations élaborées à partir de ce traceur sont ensuite acheminées dans le canal de transmission qui est associé au signal à injecter en chaque noeud.

Au niveau de chaque noeud, un circuit de surveillance traite les informations élaborées à partir des traceurs qui sont prélevés.

Le nombre de traceurs traités dépend de la quantité d'informations à élaborer.

Deux techniques sont utilisables pour acheminer ces informations aux moyens de gestion du réseau en anneau.

Une première technique consiste à utiliser le canal de transmission à bas débit qui est associé, par sur-modulation, au signal de large bande injecté dans le réseau en anneau.

Une deuxième technique, utilisable lorsque les informations sont transmises selon la norme de transmission HNS, consiste à utiliser le sur-débit du signal large bande injecté dans l'anneau, comme par exemple une voie de communication de service F1 ou E1, E2.

Cette deuxième technique est particulièrement adaptée aux réseaux en anneau de petite taille, à haut débit STM-16, où l'amplification optique est peu utilisée.

Au niveau de la tête de réseau (formant le noeud principal du réseau), où se trouvent les moyens de gestion de l'anneau, la corrélation des messages qui sont élaborés à chaque noeud et transmis dans l'anneau permet de surperviser chaque section de la couche optique.

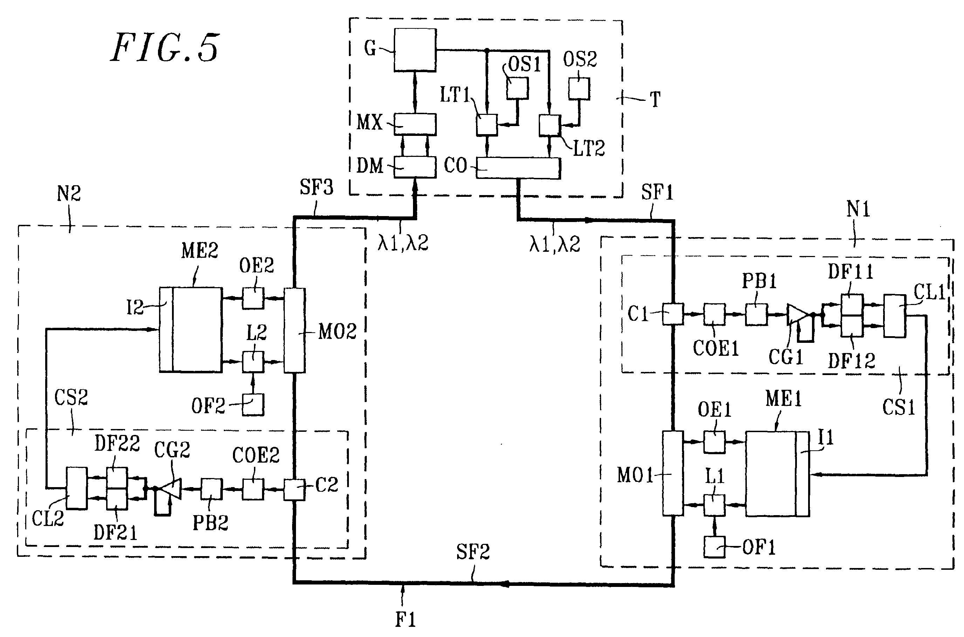

La figure 5 est une vue schématique d'un mode de réalisation particulier du système de surveillance objet de l'invention.

Ce système de la figure 5 est destiné à surveiller un réseau en anneau multi-longueur d'onde.

Ce réseau est destiné à la transmission, selon la norme HNS, d'informations sous forme optique, qui sont multiplexés en longueur d'onde.

Ce réseau comprend :
- deux noeuds N1 et N2 et une tête de réseau T,
- une fibre optique F1 qui passe successivement par les noeuds N1 et N2 et par la tête de réseau T, qui relie optiquement ces derniers et qui est destinée à être parcourue dans un sens donné par les informations (le réseau est unidirectionnel),
- deux MIE référencés ME1 et ME2 et respectivement situés dans les noeuds N1 et N2,
- deux MIEO référencés MO1 et M02 et respectivement associés aux multiplexeurs ME1 et ME2, et
- des moyens de gestion G du réseau, qui sont situés dans la tête de réseau T.

On distingue trois sections dans le réseau de la figure 5, à savoir la section de fibre SF1 qui va de la tête T au noeud N1, la section de fibre SF2 qui va du noeud N1 au noeud N2 et la section de fibre SF3 qui va du noeud N2 à la tête T.

Dans le réseau de la figure 5, une longueur d'onde optique λ1, par exemple égale à 1549 nm, est affectée au noeud N1 et une longueur d'onde optique λ2, par exemple égale à 1541 nm, est affectée au noeud N2.

Les moyens de gestion G et les multiplexeurs ME1 et ME2 échangent des informatons les uns avec les autres.

Chacun des multiplexeurs MO1 et M02 est destiné à insérer dans la fibre F1 les informations provenant du MIE associé et à extraire de cette fibre F1 les informations destinées à ce MIE associé.

Chaque multiplexeur ME1 ou ME2 est muni d'un convertisseur opto-électrique OE1 ou OE2 pour convertir sous forme électrique les informations à la longueur d'onde λ1 ou λ2 qui sont extraites par le multiplexeur associé MO1 ou M02.

Chaque multiplexeur ME1 ou ME2 est également muni d'un laser L1 ou L2 destiné à convertir sous forme optique, à la longueur d'onde λ1 ou λ2, les informations qui sont issues de ce multiplexeur ME1 ou ME2 et qui doivent être insérées, grâce au multiplexeur associé MO1 ou MO2, parmi les informations non extraites.

En plus des moyens de gestion G, la tête de réseau T comprend deux lasers LT1 et LT2 qui émettent respectivement aux longueurs d'onde λ1 et λ2 et qui sont commandés par les moyens de gestion G.

Chacun de ces lasers LT1 et LT2 reçoit de la part des moyens G des informations (STM-1) sous forme électrique et convertit ces informations sous forme optique.

Ces informations sont envoyées dans la fibre F1 par l'intermédiaire d'un coupleur optique CO relié, d'un côté, aux sorties des lasers LT1 et LT2 et, de l'autre côté, à une extrémité de la fibre F1.

La tête de réseau T comprend également un moyen de démultiplexage optique DM (par exemple un démultiplexeur à réseau de diffraction) qui est connecté, d'un côté, à l'autre extrémité de la fibre F1 pour recevoir les signaux de longueurs d'onde λ1 et λ2 et, de l'autre côté, à un moyen de multiplexage électrique MX.

Ce moyen de multiplexage MX est muni, à son entrée, de moyens (non représentés) de conversion opto-électrique qui reçoivent les signaux optiques, de longueurs d'onde λ1 et λ2, séparés par les moyens de démultiplexage DM, et convertissent ceux-ci sous forme électrique.

De plus, le moyen de multiplexage MX communique avec les moyens de gestion G notamment pour transmettre à ceux-ci les signaux électriques multiplexés par ce moyen MX.

Le système de surveillance conforme à l'invention, qui est schématiquement représenté sur la figure 5, comprend :
- des moyens de superposition, et
- deux circuits de surveillance CS1 et CS2 respectivement placés dans les noeuds N1 et N2 du réseau.
   Les moyens de superposition MS comprennent deux oscillateurs électriques sinusoïdaux de fréquences respectives f1 et f2, qui sont respectivement référencés OS1 et OS2 et associés aux lasers LT1 et LT2 dans la tête de réseau T.

Comme les moyens de gestion G, ces oscillateurs OS1 et OS2 modulent respectivement les lasers associés LT1 et LT2 par des signaux sinusoïdaux de basse fréquence.

De plus, les moyens de superposition MS comprennent deux oscillateurs électriques sinusoïdaux de fréquences respectives f1 et f2, qui sont respectivement référencés OF1 et OF2 et associés aux lasers L1 et L2.

Comme le multiplexeur ME1 (ou ME2), l'oscillateur OF1 (ou OF2) module le laser associé L1 (ou L2) par des signaux sinusoïdaux de basse fréquence f1 (ou f2).

Les fréquences f1 et f2 sont toutes deux choisies en deçà de la bande de transmission associée aux informations à transmettre dans le réseau.

A titre d'exemple, les signaux de large bande correspondant à ces informations sont transmis avec un débit de 155 Mbits/s (STM1).

Chaque circuit de surveillance CS1 ou CS2 comprend successivement :
- un coupleur optique C1 ou C2 inséré dans la fibre F1 ou F2, dans le noeud correspondant N1 ou N2, en amont du MIEO correspondant MO1 ou MO2,
- un convertisseur opto-électrique COE1 ou COE2 relié au coupleur C1 ou C2,
- un filtre passe-bas PB1 ou PB2 relié au convertisseur COE1 ou COE2,
- un dispositif de contrôle automatique de gain CG1 ou CG2 relié au filtre PB1 ou PB2,
- deux détecteurs de fréquence, ou détecteurs de tonalité, référencés DF11, DF12 ou DF21, DF22, qui sont montés en parallèle et reçoivent tous deux le signal de sortie du dispositif de contrôle automatique de gain CG1 ou CG2, et
- un circuit logique de commande CL1 ou CL2 dont les deux entrées sont respectivement reliées aux sorties des deux détecteurs DF11, DF12 ou DF21, DF22 et dont la sortie est reliée à l'interface d'entrée I1 ou I2 du multiplexeur ME1 ou ME2.

Chaque coupleur C1 ou C2 est destiné à prélever une infime partie de la puissance optique globale qui lui parvient par l'intermédiaire de la fibre F1 (par exemple 5% de cette puissance) en vue de la surveillance du réseau en anneau.

Chaque circuit de surveillance SC1 ou SC2 fournit des informations qui sont insérées dans la trame STM-1 et qui sont ainsi récupérées au niveau de la tête de réseau et traitées grâce aux moyens de gestion G.

Conformément à l'invention, on détecte la sur-modulation en fréquence pour savoir s'il y a présence ou abscence des traceurs (f1, f2) à l'entrée de chaque station.

A l'entrée de chaque noeud N1 ou N2, auquel la longueur d'onde λ1 ou λ2 est assignée, le coupleur C1 ou C2 est un coupleur de type 5/95 qui laisse passer 95% des signaux optiques, qui lui parviennent par l'intermédiaire de la fibre F1, vers le multiplexeur MO1 ou MO2, et qui prélève 5% de ces signaux pour les utiliser dans le circuit de surveillance correspondant.

Le convertisseur COE1 ou COE2 est une photodiode qui convertit en signaux électriques les signaux optiques (5%) provenant du coupleur C1 ou C2.

Après ce convertisseur, on dispose d'un signal électrique qui est constitué de la partie utile de l'information (vers les hautes fréquences) ainsi que de la partie de signalisation réservée à la surveillance (vers les basses fréquences).

Le filtre passe-bas PB1 ou PB2, placé à la suite du convertisseur COE1 ou COE2 est destiné à éliminer toute la partie de haute fréquence du signal, partie qui est inutile pour la surveillance du réseau.

Le dispositif de contrôle automatique de gain CG1 ou CG2 reçoit les signaux ainsi filtrés et permet d'envoyer ceux-ci aux deux détecteurs de tonalité associés DF11, DF12 ou DF21, DF22 avec un niveau de tension constant, quel que soit le niveau de puissance à l'entrée du dispositif de contrôle automatique de gain.

Chaque détecteur de tonalité est un circuit intégré qui est pré-réglé sur l'une des deux fréquences f1 et f2 et qui permet de savoir s'il y a, à son entrée, présence ou absence d'un signal électrique à cette fréquence.

Les détecteurs DF11 et DF21 sont tous deux pré-réglés sur la fréquence f1 tandis que les détecteurs DF12 et DF22 sont tous deux pré-réglés sur la fréquence f2.

Chacun des détecteurs DF1i et DF2i, qui est pré-réglé sur la fréquence fi, où l'indice i prend la valeur 1 ou 2, fournit en sortie une tension Vsi qui est :
- au niveau bas (OV) si un signal à la fréquence fi est présent à son entrée, ou
- au niveau haut (5V) s'il n'y a pas de signal à cette fréquence fi à son entrée.

Cette information de présence ou d'absence de fréquence est transférée, grâce au circuit logique de commande correspondant CL1 ou CL2, dans un octet qui est transmis dans le surdébit du signal envoyé à la tête du réseau T.

Les moyens de gestion G lisent les octets de surdébit.

Les informations élaborées pour la surveillance du réseau en anneau sont ainsi centralisées et permettent la surpervision du réseau.

Dans l'exemple de la figure 5, on obtient des séquences de 4 bits V1, V2, V3 et V4 que l'on utilise en tant que bits d'octets F1 du RSOH dont il a été question plus haut.

Plus précisément, au niveau du noeud N1, on insère deux informations de tension dans un octet F1, noté F1-1, et ces informations constituent deux bits B11 et B12 de F1-1.

De même, au niveau du noeud N2, on insère deux informations de tension dans un octet F1, noté F1-2, et ces informations constituent deux bits B21 et B22 de F1-2.

Les moyens de gestion G permettent de visualiser les surdébits des informations que reçoivent ces moyens G et en particulier les octets F1.

Ainsi, on retrouve exactement les informations V1 V2, V3 et V4 c'est-à-dire les tensions Vs1 et Vs2 pour chacun des noeuds N1 et N2.

Le tableau II ci-dessous représente un exemple de table de vérité des alarmes pour un réseau en anneau du genre de celui de la figure 5.

**TABLEAU II**

| | NOEUD N1 NOEUD N2 | | | | TÊTE DE RÉSEAU | | | |
|---|---|---|---|---|---|---|---|---|
| | F1-1 | | F1-2 | | F1-1 | | F1-2 | |
| | B11 | B12 | B21 | B22 | B11 | B12 | B21 | B22 |
| Rupture SF1 | 1 | 1 | 0 | 1 | 1 | 1 | 0 | 1 |
| Rupture SF2 | 0 | 0 | 1 | 1 | Perdus | | 1 | 1 |
| Rupture SF3 | 0 | 0 | 0 | 0 | Perdus | | Perdus | |
| Défaut insertion MO1 | 0 | 0 | 1 | 0 | Perdus | | 1 | 0 |
| Défaut insertion MO2 | 0 | 0 | 0 | 0 | 0 | 0 | Perdus | |
| Défaut LT1 | 1 | 0 | 0 | 0 | 1 | 0 | 0 | 0 |
| Défaut LT2 | 0 | 1 | 0 | 1 | 0 | 1 | 0 | 1 |

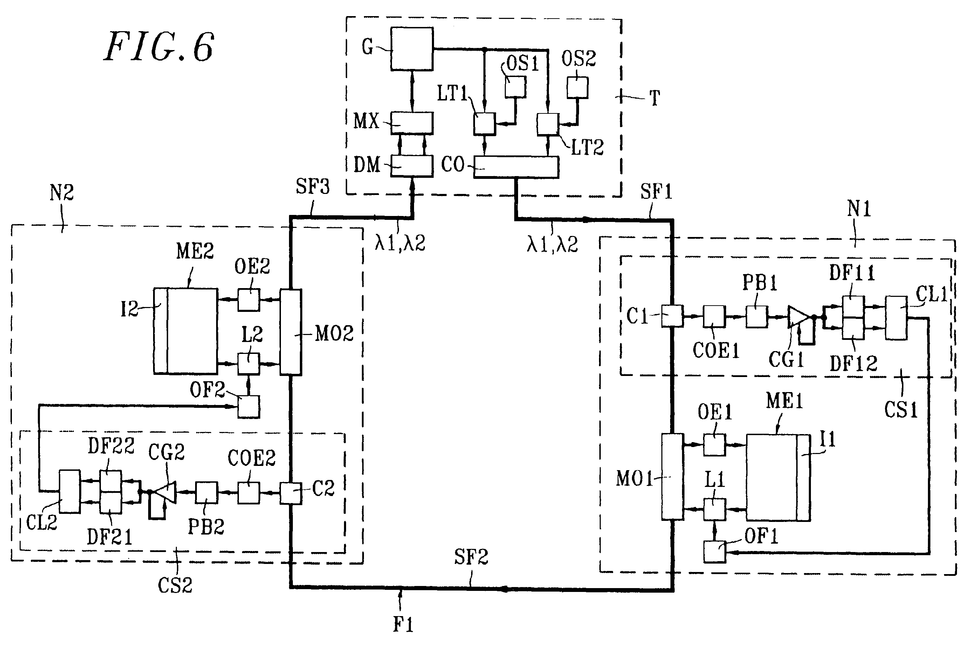

Le système de surveillance conforme à l'invention, qui est schématiquement représenté sur la figure 6, s'applique également au réseau représenté sur la figure 5 et diffère simplement du système conforme à l'invention de la figure 5 par le fait que, dans le cas de la figure 6, la sortie de chaque circuit logique de commande CL1 ou CL2 n'est pas reliée à l'interface d'entrée I1 ou I2 du multiplexeur ME1 ou ME2 mais à l'oscillateur sinusoïdal OF12 ou OF2 de manière à moduler l'onde porteuse de fréquence f1 ou f2.

Dans ce cas, pour la surveillance du réseau, on utilise le canal de transmission à bas débit qui est associé, par sur-modulation, au signal de large bande injecté dans le réseau.

On précise également que, dans le cas de la figure 6, les moyens de photodétection (non-représentés) qui sont placés à l'entrée des moyens de multiplexage électrique MX de la tête de réseau T sont suivis par un filtre passe-bande (non représenté) qui prélève les canaux à bas débit.

Ces derniers sont ensuite analysés par les moyens de gestion G.

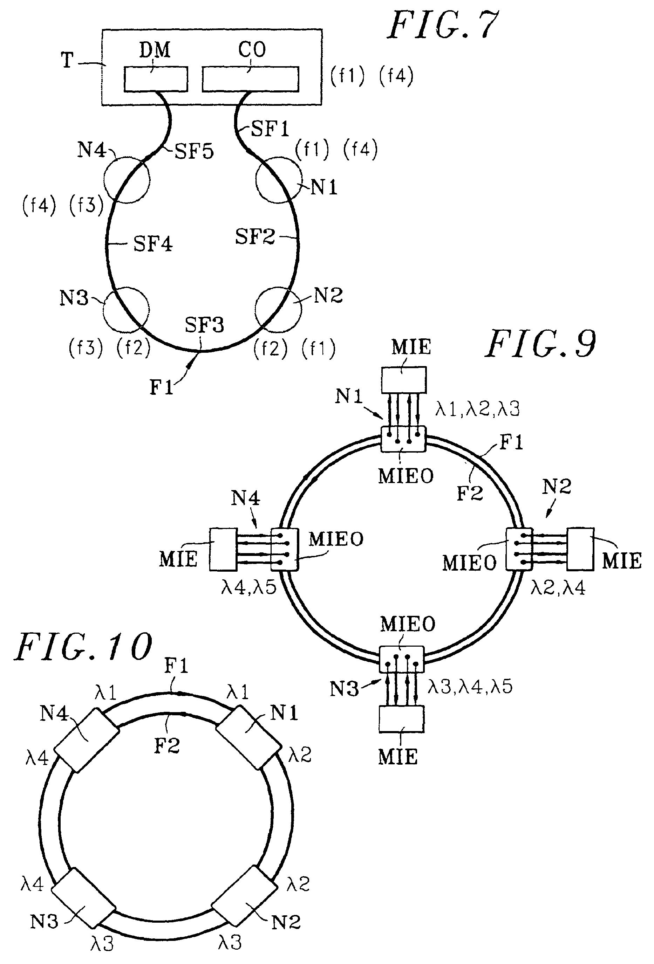

La figure 7 illustre très schématiquement la surveillance d'un réseau en anneau unidirectionnel à quatre noeuds N1, N2, N3 et N4 conformément à l'invention.

Le réseau surveillé que l'on voit sur la figure 7 comprend une fibre F1 qui va de la tête de réseau T pour revenir à cette tête de réseau en passant successivement par les noeuds N1 à N4.

Dans ce cas, il y a cinq sections de fibres respectivement référencées SF1, SF2, SF3, SF4 et SF5.

La section SF1 est comprise entre la tête de réseau T et le noeud N1, la section SF2 entre les noeuds N1 et N2, la section SF3 entre les noeuds N2 et N3, la section SF4 entre les noeuds N3 et N4 et la section SF5 entre le noeud N4 et la tête de réseau.

Des longueurs d'onde λ1, λ2, λ3 et λ4 sont respectivement affectées aux noeuds N1, N2, N3 et N4.

Dans la tête de réseau T, on a seulement représenté le coupleur optique CO connecté à une extrémité de la fibre F1 et le moyen de démultipl exage optique DM connecté à l'autre extrémité de la fibre F1.

Dans le cas de la figure 7, on utilise quatre fréquences électriques qui sont situées en dehors de la bande de transmission et respectivement notées f1, f2, f3 et f4.

Dans la tête de réseau T, on utilise deux oscillateurs électriques sinusoïdaux (non représentés) de fréquences respectives f1 et f4.

Dans le noeud N1, on utilise deux oscillateurs électriques sinusoïdaux (non représentés) de fréquences respectives f1 et f4.

Dans le noeud N2, on utilise deux oscillateurs électriques sinusoïdaux (non représentés) de fréquences respectives f2 et f1.

Dans le noeud F3, on utilise deux oscillateurs électriques sinusoïdaux (non représentés) de fréquences respectives f3 et f2.

Dans le noeud N4, on utilise deux oscillateurs électriques sinusoïdaux (non représentés) de fréquences respectives f4 et f3.

Les informations à transmettre par un réseau en anneau, par exemple du genre de celui de la figure 5, peuvent être perdues dans certains cas, notamment lorsque la fibre F1 est coupée.

On peut remédier à cet inconvénient par la transmission simultanée des informations sur deux fibres optiques, à savoir la fibre F1 (constituant la fibre normale) et une autre fibre (constituant une fibre de secours).

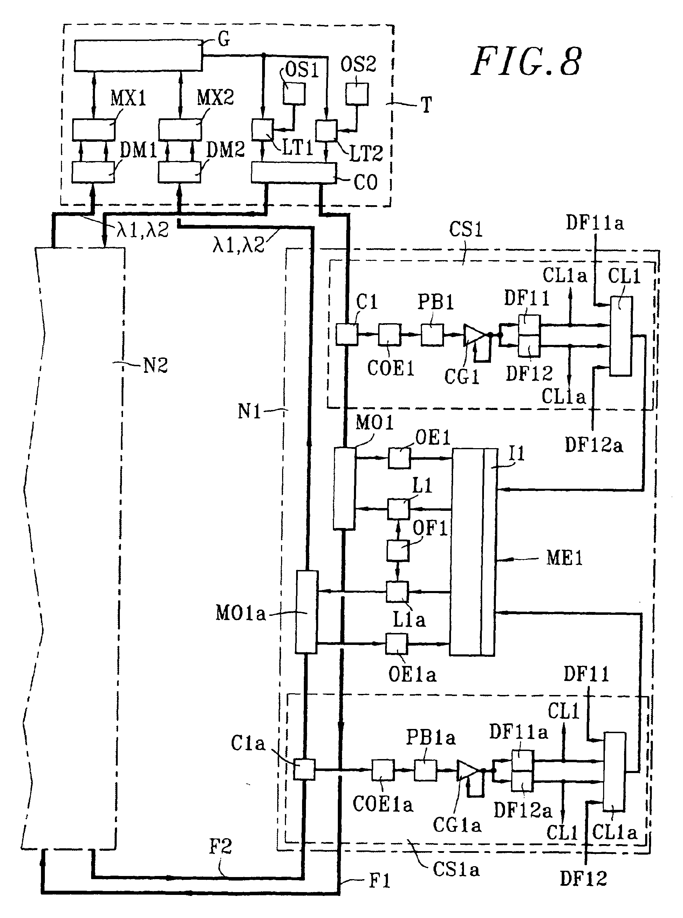

Ceci est schématiquement illustré par la figure 8 qui montre un réseau en anneau bidirectionnel à deux noeuds N1 et N2.

Il s'agit d'une modification du réseau de la figure 5.

On voit sur la figure 8, la tête de réseau T et les deux noeuds N1 et N2, auxquels sont respectivement affectées les longueurs d'onde λ1 et λ2, ainsi que la fibre optique F1 et une fibre optique supplémentaire F2 (fibre de secours).

Les fibres F1 et F2 sont parcourues en sens contraires par les informations.

Comme on le voit sur la figure 8, la plupart des composants que comprend chacun des noeuds N1 et N2 sont en deux exemplaires, l'un ayant la même référence que sur la figure 5 et l'autre ayant cette même référence suivie de la lettre a.

Par exemple, dans le cas de la figure 8, le noeud N1 comprend un double circuit de surveillance, composé du circuit élémentaire CS1 et d'un autre circuit élémentaire CS1a constitué de la même façon que le circuit CS1.

Le noeud N1 comprend aussi un double MIEO composé du multiplexeur élémentaire MO1 associé à la fibre F1 et d'un autre MIEO identique à ce multiplexeur MO1 mais associé à la fibre F2 et référencé MO1a.

Les informations sont encore prélevées sur la fibre F1 par le coupleur C1 et un coupleur supplémentaire Cla, placé en amont du multiplexeur MO1a, permet de prélever les informations sur la fibre F2 pour le circuit de surveillance correspondant CS1a.

L'oscillateur OF1 module les deux lasers L1 et L1a.

La structure du noeud N2, qui est seulement esquissée sur la figure 8, est comparable à la structure du noeud N1.

Dans la tête de réseau T du réseau de la figure 8, le coupleur CO est connecté aux deux fibres optiques F1 et F2.

Le démultiplexeur DM de la figure 5 est, dans le cas de la figure 8, remplacé par deux démultiplexeurs du genre du démultiplexeur DM, qui sont référencés DM1 et DM2 et respectivement connectés aux fibres F1 et F2.

De même, le multiplexeur électrique MX de la figure 5 est, dans le cas de la figure 8, remplacé par deux multiplexeurs électriques du genre du multiplexeur MX, qui sont référencés MX1 et MX2, sont respectivement reliés aux démultiplexeurs DM1 et DM2 et communiquent tous deux avec les moyens de gestion G.

Dans le cas de la figure 8, dans le noeud N1, les signaux issus des deux détecteurs de fréquence DF11 et DF12 sont envoyés non seulement au circuit CL1 mais aussi au circuit CL1a faisant partie du circuit de surveillance élémentaire CS1a associé à la fibre F2.

De plus, les signaux issus des deux détecteurs de fréquence DF11a et DF12a du circuit élémentaire CS1a sont envoyés non seulement au circuit logique de commande associé CL1a mais encore au circuit logique de commande CL1 du circuit de surveillance élémentaire CS1.

De telles connexions sont également effectuées dans le noeud N2.

Dans ces conditions, pour chaque noeud et pour chaque fibre, des séquences de 4 bits sont insérées dans un octet F1 du RSOH et le signal large bande incorporant alors cet octet est envoyé dans ces fibres.

Par exemple, dans le noeud N1, des séquences du type B11, B12, B13, B14 sont envoyées dans les fibres F1 et F2.

Les bits 311, B12 proviennent des détecteurs de fréquences du circuit CS1 et les bits B13, B14 proviennent des détecteurs de fréquences du circuit CS1a.

On peut également réaliser un système de surveillance conforme à l'invention, adapté à un réseau en anneau bidirectionnel à noeuds colorés comme l'illustre schématiquement la figure 9.

Le réseau schématiquement représenté sur la figure 9 comprend quatre noeuds N1, N2, N3 et N4 reliés par deux fibres optiques F1 et F2 qui sont parcourues en sens contraires par les informations circulant dans le réseau sous forme optique.

Cinq longueurs d'onde optiques λ1, λ2, λ3, λ4 et λ5 sont utilisées dans ce réseau.

Chacun des noeuds comprend un MIEO permettant d'insérer dans les deux fibres les informations qui lui parviennent d'un MIE également compris dans ce noeud et d'extraire de ces fibres les informations destinées à ce noeud qui sont alors envoyées au MIE.

Comme l'illustre schématiquement la figure 9, plusieurs longueurs d'onde optiques peuvent être traitées dans chaque noeud.

C'est ainsi que les longueurs d'onde λ1, λ2 et λ3 sont traitées dans le noeud N1, les longueurs d'onde λ2 et λ4 sont traitées dans le noeud N2, les longueurs d'onde λ3, λ4 et λ5 sont traitées dans le noeud N3 et les longueurs d'onde λ1 et λ5 sont traitées dans le noeud N4.

Par exemple, les noeuds N1 et N4 communiquent l'un avec l'autre au moyen de la longueur d'onde λ1 et les noeuds N1 et N3 communiquent l'un avec l'autre au moyen de la longueur d'onde λ3.

L'homme du métier est capable d'adapter les exemples de l'invention précédemment décrits à un tel réseau à noeuds colorés.

Dans certaines liaisons de grande longueur, il est possible d'utiliser une amplification optique au niveau des noeuds d'un réseau en anneau.

Si l'amplificateur optique est utilisé à une seule longueur d'onde, il est possible de réaliser un système de surveillance conforme à l'invention dans lequel cet amplificateur optique est surveillé comme un émetteur optique.

Si l'amolificateur optique amplifie simultanément plusieurs longueurs d'onde à l'émission ou à la réception, un point de surveillance supplémentaire est prévu dans un système de surveillance conforme à l'invention pour élaborer des signaux de surveillance supplémentaires relatifs à cet amplificateur optique.

Dans un système de surveillance conforme à l'invention, il est possible d'élaborer, au niveau de chaque point de surveillance, à partir du prélèvement du traceur fréquentiel, des signaux fonctions de la mesure de la puissance électrique du traceur, qui permet une reconnaissance de la longueur d'onde, une mesure du niveau permettant de faire apparaître les dégradations du signal.

Une comparaison avec le niveau de bruit en dehors de la bande utile du traceur permet d'élaborer le rapport signal/bruit et de donner une information sur l'évolution du rapport signal/bruit du signal de large bande, relatif aux informations "utiles".

Dans ce cas, une caractérisation est nécessaire pour assurer une corrélation entre le signal de bande étroite (traceur) et le signal de large bande.

Ainsi, une dégradation observée sur le traceur indique une dégradation également sur le signal de large bande.

On peut également réaliser un système de surveillance conforme à l'invention, adapté à un réseau en anneau bidirectionnel à sections colorées qui est décrit dans le document suivant :
Demande de brevet français n° 9505834 du 17 mai 1995, "Réseau en anneau de transmission d'informations multiplexées en longueur d'onde", A. Sutter, A. Hamel et L. Blain (voir aussi EP-A-0743772).

La figure 10 illustre schématiquement un exemple d'un tel réseau en anneau à sections colorées.

Le réseau de la figure 10 comprend quatre noeuds N1, N2, N3 et N4 et deux fibres optiques F1 et F2 parcourues en sens contraires par les informations à transmettre dans ce réseau bidirectionnel.

Comme on le voit sur la figure 10, une longueur d'onde est affectée à chaque section comprise entre deux noeuds du réseau et quatre longueurs d'onde λ1, λ2, λ3 et λ4 sont utilisées.

Par exemple, la longueur d'onde λ1 est affectée à la section entre les noeuds N1 et N2.

Le trafic échangé entre le noeud N1 et le noeud N2 emprunte cette longueur d'onde λ1 sur l'arc court (fibre F1) et également sur l'arc long (fibre F2 destinée à la protection du réseau).

Pour la mise en oeuvre de la présente invention, une surveillance de l'ensemble des longueurs d'onde λ1 à λ4 est prévue.

L'homme du métier est capable d'adapter les exemples de l'invention précédemment décrits à un tel réseau à sections colorées.

On précise que, avec un réseau à sections colorées, il convient :
- d'équiper les MIE de cartes de ligne supplémentaires et d'utiliser des moyens de gestion dans la version MSP ("*Multiplexing Section Protection*")*,*
- de "colorer" les cartes d'émission en affectant une longueur d'onde par section à protéger,
- de construire une "couche optique" (à base de multiplexeurs d'insertion-extraction) capable d'interconnecter de façon adéquate les différentes interfaces des MIE du réseau.

Dans l'un des noeuds N1 à N4 de la figure 10, constituant le noeud central, ou tête, du réseau, les informations collectées permettent d'élaborer la surveillance de la couche optique et les éventuelles alarmes sont transmises aux moyens de gestion du réseau.

Ceux-ci supervisent la transmission des informations selon la norme HNS.

La présente invention est utilisable avec d'autres normes de transmission comme par exemple la norme américaine SONET qui est très voisine de la norme HNS.

## Revendications

1. Système de surveillance d'un réseau en anneau multi-longueur d'onde, ce réseau étant destiné à la transmission, selon une norme donnée, d'informations sous forme optique, multiplexées en longueur d'onde, ces informations occupant, lorsqu'elles sont converties sous forme électrique, une bande de fréquences appelée bande de transmission, ce réseau comprenant :
- des noeuds (N1, N2; N1 à N4) optiquement reliés les uns aux autres par au moins une première fibre optique (F1, F2) qui passe successivement par ces noeuds et qui est destinée à être parcourue dans un premier sens par les informations,
- des multiplexeurs à insertion-extraction électroniques (ME1, ME2), appelés MIE, respectivement placés dans les noeuds du réseau et aptes à envoyer des informations à d'autres noeuds,
- des multiplexeurs à insertion-extraction optiques (MO1, MO2, MO1a), appelés MIEO, respectivement associés aux MIE, chaque MIEO étant apte à insérer, dans la première fibre, les informations provenant du MIE associé et à extraire de cette première fibre les informations destinées à ce MIE associé, et
- des moyens (G) de gestion du réseau, au moins une longueur d'onde étant traitée dans chaque noeud, ce système de surveillance étant **caractérisé en ce qu'**il comprend :
- des moyens (OF1, OF2, OS1, OS2) de superposition aux informations sous forme optique à une longueur d'onde par noeud donnée d'un signal optique de surveillance à cette même longueur d'onde, le signal de surveillance ayant une fréquence, lorsque ce signal est converti sous forme électrique, en dehors de la bande de transmission relative auxdites informations,
- des moyens d'envoi de ce signal de surveillance vers lesdits noeuds,
- dans chaque noeud, un circuit de surveillance (CS1, CS1a, CS2) destiné à prélever au moins une partie d'un signal optique de surveillance qui parvient à ce noeud, à élaborer des informations de surveillance en fonction de cette partie prélevée et à envoyer ces informations de surveillance dans la première fibre optique par l'intermédiaire du MIE et du MIEO de ce noeud, ces informations de surveillance pouvant ainsi parvenir aux moyens de gestion.

2. Système selon la revendication 1, **caractérisé en ce que** les informations sont transmises selon la norme de transmission Hiérarchie Numérique Synchrone.

3. Système selon la revendication 2, **caractérisé en ce que** les informations de surveillance sont envoyées aux moyens de gestion (G) après avoir été introduites dans le surdébit des informations à transmettre sous forme optique.

4. Système selon l'une quelconque des revendications 1 et 2, **caractérisé en ce que** chaque MIE comprend un moyen d'émission de lumière (L1, L1a, L2) qui est optiquement couplé au MIEO correspondant et qui est commandé par des signaux électriques correspondant aux informations à transmettre sous forme optique et par un signal électrique dont la fréquence est située en dehors de la bande de transmission, ce signal électrique étant modulé par des signaux électriques correspondant aux informations de surveillance.

5. Système selon l'une quelconque des revendications 1 à 4, **caractérisé en ce que** le réseau comprend une deuxième fibre optique (F2) passant successivement par les noeuds du réseau et destinée à être parcourue par les informations dans un deuxième sens opposé au premier sens, chaque MIEO étant apte à insérer dans la deuxième fibre les informations provenant du MIE associé et à extraire de cette deuxième fibre les informations destinées à ce MIE associé et **en ce que** les informations de surveillance envoyées dans la première fibre (F1) sont également envoyées dans la deuxième fibre (F2) et réciproquement.

6. Système selon l'une quelconque des revendications 1 à 5, **caractérisé en ce que** chaque noeud (N1, N2) est associé à une longueur d'onde.

7. Système selon la revendication 5, **caractérisé en ce que** le réseau est un réseau à noeuds colorés, chaque noeud étant apte à traiter une pluralité de longueurs d'onde.

8. Système selon la revendication 5, **caractérisé en ce que** le réseau est un réseau à sections colorées, chaque noeud étant apte à traiter deux longueurs d'onde.

9. Système selon l'une quelconque des revendications 1 à 8, **caractérisé en ce que** la fréquence de chaque signal optique de surveillance converti sous forme électrique est en deçà de la bande de transmission.

## Claims

1. Surveillance system of a multi-wavelength ring network, this network being intended for the transmission, according to a given standard, of information in optical form, wavelength multiplexed, this information occupying, when converted into electrical form, a frequency band known as transmission band, this network comprising:
- nodes (N1, N2; N1 to N4) optically linked to each other by at least one first optical fibre (F1, F2) which passes successively by these nodes and along which the information is intended to travel in a first direction,
- add-drop multiplexers (ME1, M2), known as ADMs, respectively placed in the nodes of the network and capable of sending information to the other nodes,
- optical add-drop multiplexers (MO1, MO2, MO1a), known as OADMs, respectively associated with the AMDs, each OADM being capable of inserting, in the first fibre, information coming from the associated ADM and of extracting from this first fibre information for this associated ADM, and
- network processing means (G), at least one wavelength being treated in each node,
this surveillance system being **characterized in that**
- means (OF1, OF2, OS1, OS2) of superimposing on the information in optical form for at least one wavelength per given node, an optical surveillance signal at said same wavelength, the surveillance signal having a frequency, when this signal is converted into electrical form, outside the transmission band relative to said information
- means for sending said surveillance signal to said nodes,
- in each node, a surveillance circuit (CS1, CS1a, CS2) for sampling at least one part of an optical surveillance signal reaching this node, elaborating surveillance information in function of this sampled part and sending this surveillance information to the first optical fibre via the ADM and the OADM of this node, this surveillance information being in this way able to reach the processing means.

2. System according to claim 1, **characterized in that** the information is transmitted according to the Synchronous Digital Hierarchy transmission standard.

3. System according to claim 2, **characterized in that** the surveillance information is sent to the processing means (G) after being introduced in the overhead of the information to be transmitted optically.

4. System according to either of the claims 1 and 2, **characterized in that** each ADM comprises a means of emitting light (L1, L1a, L2) which is optically coupled to the corresponding OADM and which is controlled by electrical signals corresponding to the information to be transmitted optically and by an electrical signal whose frequency is situated outside the transmission band, this electrical signal being modulated by electrical signals corresponding to the surveillance information.

5. System according to any one of the claims 1 to 4, **characterized in that** the network comprises a second optical fibre (F2) passing successively by the nodes of the network and along which information is intended to travel in a second direction opposite to the first direction, each OADM being capable of inserting information coming from the associated ADM in the second fibre, and of extracting from this second fibre information intended for the associated ADM and **in that** the surveillance information sent in this first fibre (F1) is also sent in the second fibre (F2) and vice versa.

6. System according to any one of the claims 1 to 5, **characterized in that** each node (N1, N2) is associated with a wavelength.

7. System according to claim 5, **characterized in that** the network is a coloured-node network, each node being capable of treating a plurality of wavelengths.

8. System according to claim 5, **characterized in that** the network is a coloured-section network, each node being capable of treating a plurality of wavelengths.

9. System according to any one of the claims 1 to 8, **characterized in that** the frequency of each optical surveillance signal converted into electrical form is below the transmission band.

## Patentansprüche

1. System zur Überwachung eines Vielwellenlängen-Ringnetzes, welches Netz zum Übertragen von Informationen in optischer Form gemäß einer gegebenen Norm ausgelegt ist, die wellenlängen-multiplexiert sind, wobei diese Informationen, wenn sie in elektrischer Form umgewandelt sind, ein als Übertragungsband bezeichnetes Frequenzband besetzen, wobei dieses Netz umfasst:
- Knoten (N1, N2; N1 bis N4), die optisch miteinander mittels wenigstens einer ersten optischen Faser (F1, F2) verbunden sind, die nacheinander durch diese Knoten verläuft und die dazu ausgelegt ist, in einer ersten Richtung von den Informationen durchlaufen zu werden,
- elektronische Einfügungs-Extraktionsmultiplexer (ME1, ME2), genannt MIE, die jeweils in den Netzknoten angeordnet und dazu ausgelegt sind, Informationen zu anderen Knoten zu schicken,
- optische Einfügungs-Extraktionsmultiplexer (MO1 M02, MO1a), genannt MIEO, die jeweils den MIE zugeordnet sind, wobei jeder MIEO dazu ausgelegt ist, in die erste Faser die vom zugeordneten MIE stammenden Informationen einzufügen und aus dieser ersten Faser die für diesen zugeordneten MIE bestimmten Informationen zu extrahieren, und
- Mittel (G) zur Steuerung des Netzes, wobei wenigstens eine Wellenlänge in jedem Knoten verarbeitet wird, wobei dieses Überwachungssystem **dadurch gekennzeichnet ist, dass** es umfasst:
- Mittel (OF1, OF2, OS1, OS2), um den Informationen in optischer Form bei einer gegebenen Wellenlänge pro Knoten ein optisches Überwachungssignal mit dieser gleichen Wellenlänge zu überlagern, wobei das Überwachungssignal dann, wenn dieses Signal in elektrische Form umgewandelt ist, eine Frequenz außerhalb des Übertragungsbands bezüglich der Informationen hat,
- Mittel zum Schicken dieses Überwachungssignals zu den Knoten,
- in jedem Knoten eine Überwachungsschaltung (CS1, CS1a, CS2), die dazu ausgelegt ist, wenigstens einen Teil eines optischen Überwachungssignals abzuzweigen, das zu diesem Knoten gelangt, Überwachungsinformationen als Funktion dieses abgezweigten Teils zu erstellen, und diese Überwachungsinformationen mittels des MIE und des MIEO dieses Knotens in die erste optische Faser zu schicken, wobei diese Überwachungsinformationen somit zu den Steuermitteln gelangen können.

2. System nach Anspruch 1, **dadurch gekennzeichnet, dass** die Informationen gemäß der Übertragungsnorm der synchronen digitalen Hierarchie (Hierarchie Numérique Synchrone) übertragen werden.

3. System nach Anspruch 2, **dadurch gekennzeichnet, dass** die Überwachungsinformationen an die Steuermittel (G) geschickt werden, nachdem sie in den in optischer Form zu übertragenden Informations-Überfluss eingefügt worden sind.

4. System nach einem der Ansprüche 1 und 2, **dadurch gekennzeichnet, dass** jeder MIE eine Lichtemissionseinrichtung (L1, L1a, L2) umfasst, die optisch mit dem entsprechenden MIEO gekoppelt ist und die durch die elektrischen Signale gesteuert wird, die den in optischer Form zu übertragenden Informationen entsprechen, sowie durch ein elektrisches Signal, dessen Frequenz außerhalb des Übertragungsbands liegt, wobei dieses elektrische Signal durch elektrische Signale moduliert wird, die den Überwachungsinformationen entsprechen.

5. System nach einem der Ansprüche 1 bis 4, **dadurch gekennzeichnet, dass** das Netz eine zweite optische Faser (F2) umfasst, die nacheinander durch die Knoten des Netzes verläuft und dazu ausgelegt ist, von den Informationen in einer der ersten Richtung entgegengesetzten zweiten Richtung durchlaufen zu werden, wobei jeder MIEO dazu ausgelegt ist, in die zweite Faser die vom zugeordneten MIE stammenden Informationen einzufügen und aus dieser zweiten Faser die für diesen zugeordneten MIE bestimmten Informationen zu extrahieren, und dass die in die erste Faser (F1) geschickten Überwachungsinformationen ebenfalls in die zweite Faser (F2) geschickt werden und umgekehrt.

6. System nach einem der Ansprüche 1 bis 5, **dadurch gekennzeichnet, dass** jeder Knoten (N1, N2) einer Wellenlänge zugeordnet ist.

7. System nach Anspruch 5, **dadurch gekennzeichnet, dass** das Netz ein Netz mit farbigen Knoten ist, wobei jeder Knoten dazu ausgelegt ist, eine Mehrzahl von Wellenlängen zu verarbeiten.

8. System nach Anspruch 5, **dadurch gekennzeichnet, dass** das Netz ein Netz mit farbigen Abschnitten ist, wobei jeder Knoten dazu ausgelegt ist, zwei Wellenlängen zu verarbeiten.

9. System nach einem der Ansprüche 1 bis 8, **dadurch gekennzeichnet, dass** die Frequenz jedes optischen Überwachungssignals, das in elektrische Form umgewandelt ist, unterhalb des Übertragungsbands liegt.
